# EUROPEAN PATENT APPLICATION

(11) **EP 4 815 291 A1**
(43) Date of publication of application: **30.09.2026**
(21) Application number: 25167140.0
(22) Date of filing: 28.03.2025
(51) Int. Cl.: H02P 3/22, H02P 6/24, H02P 27/08

(54) **METHOD FOR BRAKING AN ELECTRIC MACHINE OF A POWER TOOL, DATA PROCESSING APPARATUS, COMPUTER PROGRAM, COMPUTER-READABLE STORAGE MEDIUM, AND USE**

(71) Applicant: Festool GmbH, 73240 Wendlingen am Neckar (DE)
(72) Inventor: HOFMANN, Tobias, 73240 Wendlingen (DE); THÜRINGER, Michael, 73240 Wendlingen (DE)
(74) Representative: Maiwald GmbH

(57) **Abstract**

A method for braking an electric machine (12) of a power tool, in particular an electronically commutated electric machine of a power tool, is described. The electric machine (12) is operable by powering stator phase windings of at least three different coils (U, V, W). The method comprises causing application of a transitory voltage (TV) on at least one of the coils (U, V, W) during a transition time span. The transitory voltage (TV) has a polarity configured for generating a current in the at least one of the coils (U, V, W) that has the same direction as a current that occurs during subsequent short-circuiting of the at least three stator coils (U, V, W). Subsequently, the at least three stator coils (U, V, W) are short-circuited. Furthermore, a data processing apparatus (28), a computer program (36), and a computer-readable storage medium (34) are described. Moreover, a use of a transitory voltage (TV) is presented. The transitory voltage (TV) is applied on at least one stator coil (U, V, W) of an electric machine (12) of a power tool when braking the electric machine (12).

## Description

The invention relates to a method for braking an electric machine of a power tool, in particular an electronically commutated electric machine of a power tool. The electric machine is operable by powering stator phase windings of at least three different stator coils.

Additionally, the invention is directed to a data processing apparatus, a computer program, and a computer-readable storage medium.

Moreover, the present invention relates to a use.

Braking an electric machine is an essential need when operating electric machines of power tools. In this context, braking of the electric machine or braking an electric machine means that a rotating part or rotor of the electric machine is decelerated, i.e. its rotational speed is reduced. Often, braking means to reduce the rotational speed of the rotating part or rotor until standstill. However, strictly speaking this is not necessary.

Known solutions for braking an electric machine include short-circuiting one or more stator coils of the electric machine. This solution has the disadvantage that high current peaks are generated in the stator coils when initiating the braking. In order to mitigate this effect, it is also known to operate the electric machine in a so-called rundown phase before short-circuiting one or more stator coils. During the rundown phase, the electric machine is neither driven nor braked. Thus, due to friction and other losses occurring in the electric machine, the rotational speed of the rotor or rotating part is reduced before short-circuiting one or more stator coils. Consequently, current peaks are reduced as compared to directly short-circuiting the stator coils.

It is an objective of the present invention to further improve the braking of electric machines of power tools.

The problem is solved by a method for braking an electric machine of a power tool. The electric machine of the power tool is in particular an electronically commutated electric machine. Moreover, the electric machine is operable by powering stator phase windings of at least three different stator coils. The method comprises:
- causing application of a transitory voltage on at least one of the coils during a transition time span, wherein the transitory voltage has a polarity configured for generating a current in the at least one of the coils that has the same direction as a current that occurs during subsequent short-circuiting of the at least three stator coils, and
- subsequently short-circuiting the at least three stator coils.

Thus, according to the present method, the act of braking the electric machine may be subdivided into two phases. During a first phase, the transitory voltage is applied. In a second phase, the at least three stator coils are short-circuited. Preferably, the method is executed until the electric machine is at a standstill, i.e. the electric machine is short-circuited until the rotor or the rotating part is at a standstill. Applying the transitory voltage is part of the braking. This implies that the transitory voltage is independent of any operational voltage used for driving the electric machine. Moreover, it is understood that during the braking, there is no need to drive the electric machine in a sense that positive torque is generated and/or exerted onto the rotor. In the context of the present method, the transitory voltage generates a current that counter-acts the electric effects resulting from initiating the short-circuiting of the at least three stator coils. The short-circuiting is done in order to exert a negative torque onto the rotor, i.e. to brake the rotor. To this end, the transitory voltage needs to have a polarity configured for generating a current in the at least one of the coils that has the same direction as a current that occurs when short-circuiting the at least three stator coils. This current may be a current occurring just after having short-circuited the at least three stator phase windings. Consequently, current peaks in the stator coils which result from initiating the short-circuiting of the at least three stator coils, can be mitigated or at least significantly reduced. This means that, using the present method, the electric machine may be braked until standstill within a comparatively short time span. At the same time, only comparatively low current peaks are generated. These effects may be used to brake the electric machine faster than in known solutions. Additionally or alternatively, the fact that the present method leads to reduced current peaks when initiating the braking can be used in order to simplify the electric machine from an electric and/or electronic point of view.

The method according to the present invention is based on the finding that short-circuiting the at least three stator coils for braking a conventional electric machine leads to comparatively high current peaks. This is due to the fact that the short-circuiting leads to significant changes, i.e. high gradients, of the currents in the at least three stator coils. Since all of the at least three stator coils have a certain inductivity, the high gradients of the current lead to the comparatively high current peaks. It has been found that causing a current in at least one of the stator coils by causing application of a transitory voltage on at least one of the stator coils during a transition time span helps to reduce the gradient of the current in the at least one of the stator coils. In simplified words, causing a current in the at least one of the stator coils has the effect that the changes of the currents following the initiation of short-circuiting are less significant. Thereby, the current peaks are reduced. This also means the more similar the current in at least one of the stator coils caused by the application of a transitory voltage on at least one of the stator coils during a transition time span and a current that results from the actual short-circuiting, the less significant are the changes of the currents and the smaller are the current peaks.

The method according to the present invention is preferably applied in or on a power tool.

The method according to the present invention may be applied in conjunction with an alternating current (AC) electric machine or in conjunction with a direct current (DC) electric machine as long as the electric machine is operable by powering stator phase windings of at least three different stator coils. In an example, the present method may be applied in conjunction with a Brushless Direct Current (BLDC) machine which often is also called an electronically commutated (EC) machine. In another example, the present method may be applied in conjunction with a permanent magnet synchronous machine (PMSM).

In case the electric machine is an electronically commutated machine, the electric machine does not comprise any physical part or assembly of parts acting as an electric commutator. Instead, the commutation is done electronically. This means that the electric machine comprises electronics configured for controlling the voltages and currents in the stator coils in a way that electric commutation may be performed. The method of the present invention is particularly suitable for electronically commutated machines.

According to an example, the transitory voltage not only has a polarity configured for generating a current in the at least one of the coils that has the same direction as a current that occurs during subsequent short-circuiting of the at least three stator phase windings, but also is configured to generate a current having the same or at least a similar amplitude and/or phasing as a current that occurs when short-circuiting the at least three stator coils. In doing so, the electric effects resulting from the short-circuiting of the at least three stator coils, i.e. a large change in current flowing through the stator coils when initiating the short-circuiting, may be counter-acted, i.e. reduced or even avoided, in a particularly effective manner. Thus, only very low current peaks are generated during the braking. As a general rule, the higher the similarity between the current associated with or caused by the transitory voltage and the actual current upon short-circuiting the at least three stator coils, the better the counter-acting, i.e. attenuation or prevention, of undesired current peaks.

According to an example, the transition time span is shorter than two milliseconds. Additionally or alternatively, the electric machine is operable using pulse width modulation, wherein the transition time span corresponds to 2 to 20 pulse width modulation cycles. Preferably, the electric machine is operable using pulse width modulation, and the transition time span corresponds to 5 to 15 pulse width modulation cycles, e.g. 8, 10 or 15 pulse width modulation cycles. Thus, the transition time span is comparatively short. Moreover, the transition time span and the transition voltage are used such that the desired braking effect, e.g. a standstill, is achieved faster, when using the method according to the present invention than when short-circuiting the at least three stator coils preceded by a rundown phase of the motor. This is due to the fact that applying the transitory voltage allows short-circuiting the at least three stator coils without any additional mitigation measure for potential current peaks which would need more time than the application of the transitory voltage. Since the transition time span may be very short compared to the time required to bring the electric machine to a standstill, the method according to the present invention may bring the electric machine to a standstill just as quickly as a directly initiated short-circuit braking action, but without generating high, potentially damaging current peaks in the transition phase. In other words, since the transition time span is very short compared to the rundown phase required to mitigate excessively high current peaks generated in the stator coils when initiating the braking, the method according to the present invention may bring the electric machine to a standstill in a shorter time span than a method that involves a rundown phase.

The transitory voltage may be based on a rotational speed of the electric machine. In other words, the transitory voltage may be a function of a rotational speed of the electric machine. It is known from prior art machines that current peaks occurring when initiating braking such machines are a function of the rotational speed of the associated rotor or rotating parts. Thus, when determining or choosing the transitory voltage based on a rotational speed of the electric machine, the counter-acting of the current peaks resulting from initiating the short-circuiting, is highly effective.

According to an embodiment, the electric machine is operable using field-oriented control. Causing the application of the transitory voltage comprises providing an associated current reference value for a current controller forming part of the field-oriented control. In other words, the current controller receives a current reference value that corresponds to the current value that is expected to occur when short-circuiting the at least three stator coils in order to determine the transitory voltage that needs to be applied to the at least one of the coils. Thus, the transitory voltage may be used also for electric machines that are operable using field-oriented control. This may even be done in a comparatively simple manner by providing a current reference value. Providing the current reference value may lead to more an efficient and effective compensation of current peaks following the application of the transitory voltage.

As has been mentioned before, the current reference value may be based on a current value that is expected to occur when short-circuiting the at least three stator coils. Preferably the current reference value is the same or at least approximates the current value that is expected to occur when short-circuiting the at least three stator coils. This allows for a particularly effective avoidance of current peaks following the initiation of the short-circuiting.

It is noted that the field-oriented control is usually applied when driving the electric machine, i.e. when operating the electric machine such that a positive torque is provided by the rotor or rotating part. When braking of the electric machine using the method according to the present invention, the same control system is used during the transition time span in order to adjust the currents of the motor to the currents that occur when subsequently short-circuiting the at least three stator coils. More precisely, when braking the electrical machine using the method of the present invention, the same control system may be used to actively cause a current during the transition time span that corresponds to the orientation, i.e. angle and magnitude, of a current resulting from the initiation of the short-circuiting. As has been mentioned before, the current is caused by causing an application of a transition voltage.

It is further noted that field-oriented control as such is a known control method for electric machines. This control method relies on knowledge of the currents in each of the stator coils, e.g. through current measurements. These currents, which are varying over time are transformed using the so-called Clark-transformation and the so-called Park-transformation. These are coordinate transformations which have the effect that two current values may be calculated which are constant over time, assuming the electric machine is operating in a steady state. Often, these current values are designated Id and Iq. Based thereon, a so-called current controller can control these calculated current values in a closed-loop control such that they correspond to associated reference currents. The reference currents are based on a reference rotational speed, a model of the electric machine and a field model. The current controller outputs two voltage values which are then transformed using an inverse Park transformation and an inverse Clark transformation. These inverse transformations result in a voltage over time for each of the stator coils. These voltages may then be applied to the respective stator coils using pulse width modulation. Thus, these voltages may be applied to the respective stator coils by operating associated switches accordingly. When using field-oriented control in conjunction with the method of the present invention, the current reference value is applied at the current controller of the field-oriented control.

It is additionally noted that the application of field-oriented control implies that all stator coils, e.g. all three stator coils, are always subject to control. This means, that there is no floating phase or floating coil which temporarily is not actively controlled.

Preferably, the method according to the present invention comprises controlling all stator coils, i.e. all of the at least three stator coils, permanently. This results in an effective and efficient counter-action, i.e. reduction, of current peaks using the transitory voltage.

The current reference value may correspond to a current value associated with short-circuiting the at least three stator coils. In other words, the current reference value equals an expected current upon short-circuiting the at least three stator coils after application of the transitory voltage. This expected current may correspond to a current occurring just after short-circuiting the at least three stator coils, i.e. at a beginning of the short-circuiting. Moreover, this is understood in the context of field-oriented control, i.e. the current reference value is used in a current controller of the field-oriented control. This current reference value is associated with a rotating reference frame and therefore invariable over time if assuming that the electric machine is operating in a steady state. The fact that these current values correspond to one another leads to an effective mitigation of the current peaks resulting from initiating the short-circuiting of the at least three stator coils. In other words, the current peaks upon initiating the braking may be significantly reduced.

According to an example, the at least three stator coils may be short-circuited under the condition that an actual current corresponds to the current reference value. At this operational condition, the maximum potential of avoiding current peaks when braking the electric machine by short-circuiting the at least three stator coils is reached. Thus, the electric machine may be braked within a very short time period while only comparatively low current peaks are generated.

In an example, the current reference value may be predefined. Thus, the current reference value may be a constant or may depend on one or more predefined parameters. In the latter case, the current reference values may be provided in the form of a look-up table. In this case, the current reference value may be stored on the controller. This is a comparatively simple and reliable way of providing the current reference value. The one or more predefined current reference values may be determined in a simulation.

In an example, the current reference value may be based on a measurement. This measurement may in particular comprise a measurement of a current peak resulting from short-circuiting the stator coils at a certain speed of the rotor. Such a measurement can be done in a factory producing the electric machine, e.g. at an end of the production line. Alternatively, measurement can be done when operating the machine. Further alternatively, this measurement may be done in a laboratory or in a test set up. It is understood that the measurement results may need to undergo the transformations associated with field-oriented control in order to determine the current reference value for the method of the present invention.

In an embodiment, the method further comprises adapting the current reference value during the service life of the electric machine. Thus, it is ensured that the current reference value is always appropriate throughout the service life of the electric machine. The adaptation of the current reference value may be based on measurements as has been explained above. Additionally or alternatively, resulting currents, i.e. resulting current peaks, may be measured during the execution of the present method for braking an electric machine. Based thereon, the current reference value may be adapted such that the current peaks occurring as a result of initiating the braking are reduced as much as possible i.e. minimized. **In** both of the above-described variants, also aging effects of rotor magnets and temperature effects are incorporated into the adaptation of the current reference value. Altogether, fast braking in combination with comparatively low current peaks is ensured over to service life of the electric machine which may comprise variations in operation conditions.

According to an alternative, the electric machine is operable using block commutation. Causing the application of the transitory voltage comprises providing an associated voltage reference value. It is understood that the block commutation is used when the electric machine is driven, i.e. when the electric machine is operated in order to output a torque. In this context, block commutation as such is known. This type of commutation describes the sequential activation and deactivation of stator coils based on a rotational position of the rotor or rotating part of the electric machine. The rotational position may be determined using an appropriate sensor, e.g. Hall sensor. The activation of a stator coil means subjecting the activated stator coil to a voltage which generally may have any form, e.g. constant, sinusoidal, etc. Thus, when braking a machine operable using block commutation, a voltage reference value is provided which is used for applying the transitory voltage. This voltage reference value may comprise a voltage magnitude and/or a timing of the voltage. Thus, the voltage reference value may as well be a function of time. This may have the effect that, compared to the known use of block commutation, a stator coil is subjected to a voltage earlier or later compared to an operating point where the machine is driven to generate a positive torque. Additionally or alternatively, the voltage to which the stator coil is subject, may be higher or lower than a voltage that would have been applied when using the known block commutation. Altogether, effective and efficient compensation of current peaks may be realized during braking.

The voltage reference value may be predefined. Thus, the voltage reference value may be a constant or may depend on one or more predefined parameters. In the latter case, the voltage reference values may be provided in the form of a look-up table. In this case, the voltage reference value may be stored on a block commutation controller. This is a comparatively simple and reliable way of providing the voltage reference value. The one or more predefined voltage reference values may be determined in a simulation.

The voltage reference value may be based on a measurement. This measurement may in particular comprise a measurement of a current peak or voltage resulting from short-circuiting of the stator coils. Such a measurement can be done in a factory producing the electric machine, e.g. at an end of the production line. Alternatively, measurement can be done when operating the machine. Further alternatively, this measurement may be done in a laboratory or in a test set up.

Additionally, the problem is solved by a data processing apparatus comprising means for carrying out the method of the present invention. Thus, using such a data processing apparatus, the act of braking the electric machine may be subdivided into two phases. During a first phase, the transition voltage is applied to at least one of the stator coils. In a second phase, the at least three stator coils are short-circuited. Preferably, the braking is done until the electric machine is at a standstill, i.e. the electric machine is short-circuited until the rotor or the rotating part is at a standstill. Applying the transitory voltage is part of the braking. This implies that the transitory voltage is independent of any operational voltage used for driving the electric machine. Moreover, it is understood that during the braking, there is no need to drive the electric machine in a sense that positive torque is generated. The transitory voltage counter-acts the electric effects resulting from a large change in current flowing through the stator coils when initiating the short-circuiting of the at least three stator coils. To this end, the transitory voltage needs to have a polarity configured for generating a current in the at least one of the coils that has the same direction as a current that occurs during subsequent short-circuiting of the at least three stator coils. Consequently, current peaks in the stator coils which result from short-circuiting the at least three stator coils, can be significantly reduced or mitigated. This means that, using the present data processing apparatus, the electric machine may be braked until standstill within a comparatively short time span. At the same time, only comparatively low current peaks are generated. These effects may be used to brake the electric machine faster than in known solutions. Additionally or alternatively, the fact that the use of the present data processing apparatus leads to reduced current peaks when initiating the braking can be used in order to simplify the electric machine from an electric and/or electronic point of view.

Moreover, the problem is solved by a computer program comprising instructions which, when the computer program is executed by a computer, cause the computer to carry out the method of the present invention. Thus, using such a computer program, the act of braking the electric machine may be subdivided into two phases. During a first phase, the transition voltage is applied to at least one of the stator coils. In a second phase, the at least three coils are short-circuited. Preferably, the braking is done until the electric machine is at a standstill, i.e. the electric machine is short-circuited until the rotor or the rotating part is at a standstill. Applying the transitory voltage is part of the braking. This implies that the transitory voltage is independent of any operational voltage used for driving the electric machine. Moreover, it is understood that during the braking, there is no need to drive the electric machine in a sense that positive torque is generated. The transitory voltage counter-acts the electric effects resulting from a large change in current flowing through the stator coils when initiating the short-circuiting of the at least three stator coils. To this end, the transitory voltage needs to have a polarity configured for generating a current in the at least one of the coils that has the same direction as a current that occurs during subsequent short-circuiting of the at least three stator phase windings. Consequently, current peaks in the stator coils which result from initiating the short-circuiting of the at least three stator coils, can be significantly reduced. This means that, using the present computer program, the electric machine may be braked until standstill within a comparatively short time span. At the same time, only comparatively low current peaks are generated. These effects may be used to brake the electric machine faster than in known solutions. Additionally or alternatively, the fact that the use of the present computer program leads to reduced current peaks can be used in order to simplify the electric machine from an electric and/or electronic point of view.

Furthermore, the problem is solved by a computer-readable storage medium comprising instructions which, when executed by a computer, cause the computer to carry out the method of the present invention. Thus, using such a computer-readable storage medium, the act of braking the electric machine may be subdivided into two phases. During a first phase, the transition voltage is applied to at least one of the stator coils. In a second phase, the at least three coils are short-circuited. Preferably, the braking is done until the electric machine is at a standstill, i.e. the electric machine is short-circuited until the rotor or the rotating part is at a standstill. Applying the transitory voltage is part of the braking. This implies that the transitory voltage is independent of any operational voltage used for driving the electric machine. Moreover, it is understood that during the braking, there is no need to drive the electric machine in a sense that positive torque is generated. The transitory voltage counter-acts the electric effects resulting from a large change in current flowing through the stator coils when initiating the short-circuiting of the at least three stator coils. To this end, the transitory voltage needs to have a polarity configured for generating a current in the at least one of the coils that has the same direction as a current that occurs during subsequent short-circuiting of the at least three stator phase windings. Consequently, current peaks in the stator coils which result from initiating the short-circuiting of the at least three stator coils, can be significantly reduced. This means that, using the present computer-readable storage medium, the electric machine may be braked until standstill within a comparatively short time span. At the same time, only comparatively low current peaks are generated. These effects may be used to brake the electric machine faster than in known solutions. Additionally or alternatively, the fact that the use of the present computer-readable storage medium leads to reduced current peaks when initiating the braking can be used in order to simplify the electric machine from an electric and/or electronic point of view.

Moreover, the problem is solved by a power tool comprising a data processing apparatus according to the present invention and an electric machine, wherein the data processing apparatus and the electric machine are communicatively coupled. Thus, in such a power tool, the act of braking the electric machine may be subdivided into two phases. During a first phase, the transition voltage is applied to at least one of the stator coils. In a second phase, the at least three stator coils are short-circuited. Preferably, the braking is done until the electric machine is at a standstill, i.e. the electric machine is short-circuited until the rotor or the rotating part is at a standstill. Applying the transitory voltage is part of the braking. This implies that the transitory voltage is independent of any operational voltage used for driving the electric machine. Moreover, it is understood that during the braking, there is no need to drive the electric machine in a sense that positive torque is generated. The transitory voltage counter-acts the electric effects resulting from a large change in current flowing through the stator coils when initiating the short-circuiting of the at least three stator coils. To this end, the transitory voltage needs to have a polarity configured for generating a current in the at least one of the coils that has the same direction as a current that occurs during subsequent short-circuiting of the at least three stator coils. Consequently, current peaks in the stator coils which result from short-circuiting the at least three stator coils, can be significantly reduced or mitigated. This means that, using the present power tool, the electric machine may be braked until standstill within a comparatively short time span. At the same time, only comparatively low current peaks are generated. These effects may be used to brake the electric machine faster than in known solutions. Additionally or alternatively, the fact that the use of the present power tool leads to reduced current peaks when initiating the braking can be used in order to simplify the electric machine from an electric and/or electronic point of view. Consequently, also the power tool may be simplified.

According to an example, the power tool is a handheld power tool.

According to another example, the power tool is a circular saw, an electric drill, a sander, a router, a biscuit joiner or a handheld CNC milling machine. Thus, in all of these power tools the electric machine may be braked until standstill faster than in known solutions. Additionally or alternatively, the fact that the use of the present power tools leads to reduced current peaks when initiating the braking can be used in order to simplify the electric machine from an electric and/or electronic point of view. Consequently, also the power tool may be simplified.

Additionally, the problem is solved by a use of a transitory voltage applied on a stator phase winding of at least one stator coil of an electric machine of a power tool when braking the electric machine. The transitory voltage is applied during a transition time span. Moreover, the transitory voltage has a polarity configured for generating a current in the at least one of the coils that has the same direction as a current that occurs during subsequent short-circuiting of the at least three stator coils. The transitory voltage is applied during a transition time span which forms part of a braking process of the electric machine. This means that applying the transitory voltage forms part of the braking. Preferably, the braking is done until the electric machine is at a standstill. This implies that the transitory voltage is independent of any operational voltage used for driving the electric machine. Moreover, it is understood that during the braking, there is no need to drive the electric machine in a sense that positive torque is generated. The transitory voltage counter-acts the electric effects resulting from a large change in current flowing through the stator coils when initiating the short-circuiting of the at least three coils. To this end, the transitory voltage needs to have a polarity configured for generating a current in the at least one of the coils that has the same direction as a current that occurs during subsequent short-circuiting of the at least three stator coils. Consequently, current peaks in the stator coils which result from initiating the short-circuiting of the at least three stator coils, can be significantly reduced. This means that, using the transitory voltage, the electric machine may be braked until standstill within a comparatively short time span. At the same time, only comparatively low current peaks are generated. These effects may be used to brake the electric machine faster than in known solutions. Additionally or alternatively, the fact that the use of the transitory voltage leads to reduced current peaks can be used in order to simplify the electric machine from an electric and/or electronic point of view.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings:
- Fig. 1: schematically shows a battery-powered handheld circular saw comprising an electric machine and a battery pack,
- Fig. 2: schematically shows a portable electric drill comprising an electric machine and a battery pack,
- Fig. 3: schematically shows a battery-powered handheld sander comprising an electric machine and a battery pack,
- Fig. 4: illustrates steps of the method according to the present invention,
- Fig. 5: shows the electric machine, the battery pack and associated power electronics of each of the power tools of Figures 1 to 3 in an electric diagram,
- Fig. 6: illustrates a voltage over time for each of the stator coils of the electric machine of Figure 5 during a time period including the execution of the method according to the present invention,
- Fig. 7: illustrates a current over time for each of the stator coils of the electric machine of Figure 5 during a time period including the execution of the method according to the present invention, and
- Fig. 8: illustrates a rotational speed over time for the rotor of the electric machine of Figure 5 during a time period including the execution of the method according to the present invention.

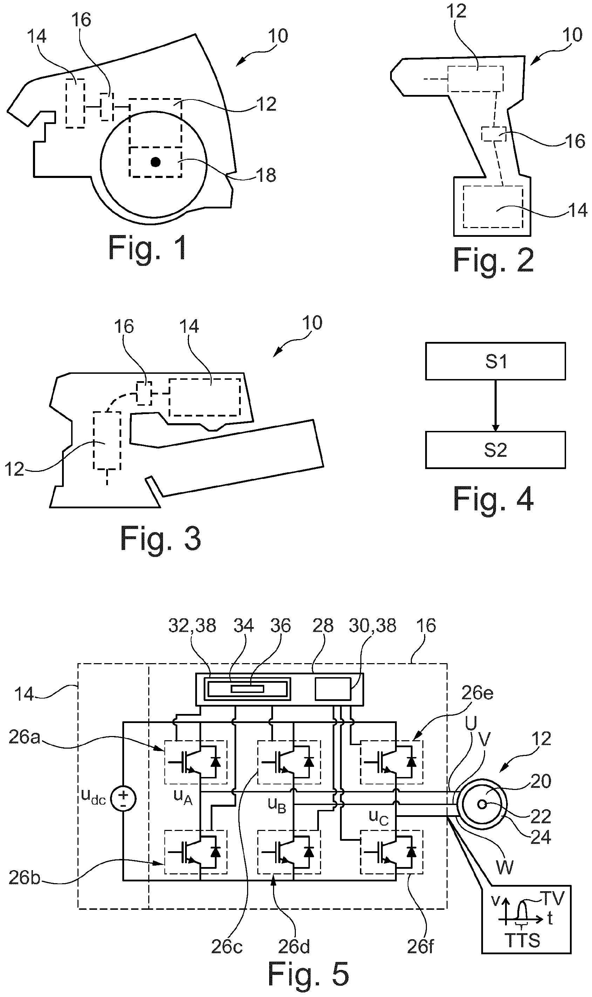

Figures 1, 2, and 3 each show a handheld, battery-powered machine tool 10. In short, such tools may be designated as power tools.

In case of figure 1, this power tool is a circular saw. In case of figure 2, this power tool is an electric drill, and in case of figure 3 this tool power is a sander.

All of these power tools comprise an electric machine 12 that is powered by a battery pack 14. In each of these examples, the electric machine 12 and the battery pack 14 are connected via a power electronics unit 16. The circular saw of figure 1 additionally comprises a power transmission unit 18 drivingly coupling the electric machine 12 to the saw blade. Of course, it is not excluded that also other examples of the machine tool 10 comprise a power transmission unit.

It is understood that the fact that the machine tools 10 as shown in figures 1 to 3 are battery-powered is an example only. In other examples, the machine tool 10 may be powered via an electric grid to which is may be connected using a cable. In the latter case, the machine tool 10 may comprise an inverter unit.

Even though the power electronics unit 16 is represented as a separate entity in figures 1, 2, and 3, it is also possible that the power electronics unit 16 is provided as a component of the electric machine 12. This means that the power electronics unit 16 may be integrated into the electric machine 12. Then, the combination of the electric machine 12 and the power electronics unit 16 may be called an electric drive unit. This would be the case, if the electric machine 12 was a Brushless Direct Current (BLDC) machine. By having the power electronics unit 16 integrated into the electric machine 12, the electric machine 12 can be designed in a very compact manner. According to another alternative, it is possible that the power electronics unit 16 is provided as a component of the battery pack 14. This means that the power electronics unit 16 may be integrated into the battery pack 14.

Figure 5 shows the battery pack 14, the electric machine 12 and the power electronics unit 16 in an electric diagram. This electric diagram applies to all of the handheld, battery-powered machine tools 10 as shown in figures 1, 2, and 3. Therefore, the following explanations apply to all of these handheld, battery-power machine tools 10 and it will not be distinguished between the specific examples of figures 1, 2, and 3.

The battery pack 14 may be a rechargeable lithium-ion battery pack configured to provide direct current (DC).

The electric machine 12 comprises a rotor 20 with an output shaft 22, and a stator 24.

In the present example, the rotor 20 comprises a number of permanent magnets. The stator 24 comprises three stator coils which comprise associated phase windings. In figure 5, these coils and the associated phase windings are indicated by the electric lines denoted U, V and W connecting the electric machine 12 with the power electronics unit 16.

The electric machine 12 further is a so-called electronically commutated electric machine. This means that the electric machine 12 does not comprise a physical commutator. Instead, the necessary commutation is performed by the power electronics unit 16, i.e. electronically.

Thus, the power electronics unit 16 fulfills a number of functions in the present example: The power electronics unit 16 transforms direct current (DC) provided by the battery pack 14 into alternating current (AC) provided to the stator coils U, V, W of the stator 24. Therefore, the power electronics unit 16 may also be called an inverter unit. Moreover, the power electronics unit 16 is used as an electronic commutator, as has already been mentioned above. Furthermore, the power electronics unit 16 is configured to control a rotational speed and torque provided by the rotor 20, more precisely the output shaft 22.

In order to fulfill all these functionalities, the power electronics unit 16 comprises a total of six switches 26a, 26b, 26c, 26d, 26e, 26f. In figure 5, each of the switches 26a, 26b, 26c, 26d, 26e, 26f is represented by a transistor and a diode.

Switch 26a connects the stator coil of phase U to the positive pole of the battery pack 14. Switch 26b connects the stator coil of phase U to the negative pole of the battery pack 14.

In the same manner, switch 26c connects the stator coil of phase V to the positive pole of the battery pack 14. Switch 26d connects the stator coil of phase V to the negative pole of the battery pack 14.

Moreover, switch 26e connects the stator coil of phase W to the positive pole of the battery pack 14. Switch 26f connects the stator coil of phase W to the negative pole of the battery pack 14.

Each of the switches 26a to 26f is communicatively connected to a data processing apparatus 28 which also forms part of the power electronics unit 16.

The data processing apparatus 28 comprises a data processing unit 30 and a data storage unit 32. The data storage unit 32 comprises a computer-readable storage medium 34.

On the computer-readable storage medium 34, there is provided a computer program 36.

This computer program 36 comprises instructions which, when executed by the data processing unit 30 causes the data processing apparatus 28, or more generally speaking a computer, to execute a method for operating the electric machine. This method comprises causing an orchestrated operation of the switches 26a to 26f and, thus, operation of the electric machine 12. In this context, the computer program 36 may for example comprise instructions related to a so-called field-oriented control. When executing these instructions, the electric machine 12 is operated.

Controlling and operating an electric machine using field-oriented control is well known as such. This control method relies on knowledge of the currents in each of the stator coils U, V, W, e.g. through current measurements. These currents, which are varying over time are transformed using the so-called Clark-transformation and the so-called Park-transformation. These are coordinate transformations which have the effect that two current values may be calculated which are constant over time, assuming the electric machine is operating in a steady state. Often, these current values are designated Id and Iq. Based thereon, a so-called current controller can control these calculated current values in a closed-loop control such that they correspond to associated reference currents. The reference currents are based on a reference rotational speed, a model of the electric machine and a field model. The current controller outputs two voltage values which are then transformed using an inverse Park transformation and an inverse Clark transformation. These inverse transformations result in a voltage over time for each of the stator coils U, V, W. These voltages may then be applied to the respective stator coils U, V, W using pulse width modulation. Thus, these voltages may be applied to the respective stator coils U, V, W by operating associated switches 26a to 26f accordingly.

In the present example, the computer program 36, and therefore also the computer-readable storage medium 34, additionally comprise instructions, which, when executed by the data processing unit 30, cause the data processing apparatus 28 or, more generally speaking, a computer, to carry out a method for braking an electric machine.

Consequently, the data processing unit 30 and the data storage unit 32 form means 38 for carrying out a method for braking an electric machine.

The method for braking the electric machine will be explained in more detail in the following.

The method essentially comprises two steps S1, S2 (see also Figure 4).

In a first step S1, a transitory voltage TV is caused to be applied on at least one of the stator coils U, V, W. This is done during a transition time span TTS which in the present example, in which pulse width modulation is used for power the stator 24, corresponds to eight pulse width modulation cycles.

In Figure 5, the transitory voltage TV and the associated transition time span TTS is represented for coil W only for reasons of better overview. A transitory voltage TV may as well be applied to coil U and coil V.

The transitory voltage TV has a polarity configured for generating a current in the at least one of the coils U, V, W that has the same direction as a current that occurs during subsequent short-circuiting of the at least three stator phase windings U, V, W, and is selected such that a magnitude of the generated current substantially equals a current that occurs when short-circuiting the at least three stator phase windings U, V, W, as will be explained in more detail in the following.

Moreover, the transitory voltage TV is based on a rotational speed of the electric machine 12, i.e. a rotational speed of the rotor 20 when starting the method for braking the electric machine.

In a subsequent second step S2, the stator coils U, V, W are short-circuited.

To this end, switches 26a, 26c and 26e may be simultaneously closed. Alternatively, switches 26b, 26d and 26f may be simultaneously closes. It is also possible to alternate between these two scenarios in order to reduce a thermal load on the switches 26a to 26f.

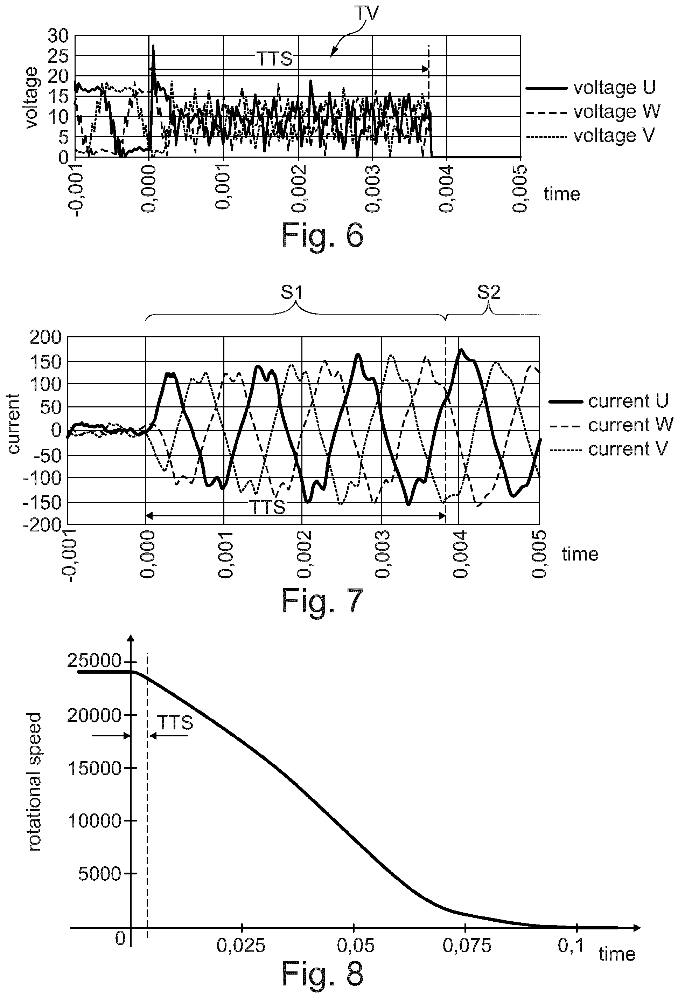

The effects of this method for braking the electric machine are illustrated in figures 6, 7 and 8.

Figure 6 shows the voltage over time for each of the stator coils U, V, W.

The application of the transitory voltage TV can be seen as a voltage over time in each of the stator coils U, V, W just before the voltage becomes zero due to the short-circuiting of the stator coils U, V, W.

Figure 7 shows the current over time for each of the stator coils U, V, W. The timescales of figures 6 and 7 correspond to one another. This means that a voltage and a current value lying on the same vertical line have been measured at the same time.

As can be clearly seen from figure 7, short-circuiting the stator coils U, V, W results in a very small current peak only.

Finally, figure 8 shows the rotational speed of the output shaft 22 during the transition time span and beyond until the output shaft 22 is at a standstill.

In the present case, the rotational speed is decelerated to zero. The act of braking needs approximately 0.1 seconds, i.e. less than 0.4 seconds only. This includes the period of applying the transitory voltage TV.

In a case in which the electric machine 12 is operated using field-oriented control, the application of the transitory voltage TV may be caused by providing an associated current reference value for a current controller forming part of the field-oriented control.

This means that when starting the method for braking the electric machine 12, the current reference value is provided to the current controller. This leads to the transitory voltage TV being caused to be provided to the stator coils U, V, W.

In this context, the current reference value corresponds to a current value associated with short-circuiting the at least three stator coils U, V, W. This means that the current reference value may be predefined and for example stored on the data storage unit 32.

The current reference value may be determined by theoretical calculations describing the electric effects resulting from short-circuiting the stator coils U, V, W. Additionally or alternatively, the current reference value may be determined using simulation. Further additionally or alternatively, the current reference value may be based on a measurement. This means that a current is measured during short-circuiting of the stator coils and, based thereon, the current reference value is determined which leads to the transitory voltage TV which counter-acts current peaks resulting from the short-circuiting.

This can be seen from Figure 7 wherein the currents in the stator coils U, V, W during the transition time span TTS only differ slightly from the currents in the stator coils U, V, W at the beginning of the short-circuiting of the stator coils U, V, W, i.e. directly after the end of the transition time span TTS.

In order to account for aging effects or other unforeseen changes in the electric machine 12, the current reference value may be adapted during service life of the electric machine 12 such that the desired compensation of current peaks is available throughout the service life.

According to an alternative, so-called block commutation may be used for commutating the electric machine 12. Also in this case, the method for braking the electric machine 12 may be applied. However, the following differences apply with respect to the electric machine using field-oriented control.

Instead of providing a reference current value in order to cause the transitory voltage TV to be applied, now a voltage reference value is provided. In order to fully define this voltage reference value, a magnitude and a timing, e.g. phasing, of the voltage reference value needs to be defined.

Moreover, a duration of the voltage reference value needs to be defined which, in the present example, may be 2 milliseconds or less.

Similar to what has been explained before, the voltage reference value may be predefined.

The voltage reference value may be determined by theoretical calculations describing the electric effects resulting from short-circuiting the stator coils. Additionally or alternatively, the voltage reference value may be determined using simulation. Further additionally or alternatively, the voltage reference value may be based on a measurement. This means that a voltage is measured during short-circuiting of the stator coils and, based thereon, the voltage reference value is determined which leads to the transitory voltage TV which counter-acts current peaks resulting from the short-circuiting.

In order to account for aging effects or other unforeseen changes in the electric machine, the voltage reference value may be adapted during service life of the electric machine 12 such that the desired compensation of current peaks is available throughout the service life.

Thus, in all of the above examples, a transitory voltage TV is applied on a stator phase winding of at least one stator coil U, V, W of an electric machine 12 when braking the electric machine 12. The transitory voltage TV is applied during a transition time span TTS which is comparatively short. Moreover, the transitory voltage TV has a polarity configured for generating a current in the at least one of the coils U, V, W that has the same direction as a current that occurs during subsequent short-circuiting of the at least three stator coils.

It is noted that even though the method for braking an electric machine has been explained in connection with a battery-powered machine tool 10, which has been exemplified as a circular saw, an electric drill, and a sander, it is also possible to use the method for braking an electric machine in connection with a battery-powered machine tool 10 which is a router, a biscuit joiner or a handheld CNC milling machine. The above explanations apply mutatis mutandis. Moreover, as has been mentioned before, the fact that the machine tool is battery-powered is optional. It is also possible that the machine tool is powered via an electric grid to which it may be connected using a cable.

It is further noted that even though the method for braking an electric machine has been explained in connection with a battery-powered machine tool 10, this is not necessarily the case. This means that the method for braking an electric machine may generally be used in connection with any electric machine independent of a specific application or use of the electric machine.

### List of reference signs

- 10: handheld, battery-powered tool
- 12: electric machine
- 14: battery pack
- 16: power electronics unit
- 18: power transmission unit
- 20: rotor
- 22: output shaft
- 24: stator
- 26a: switch
- 26b: switch
- 26c: switch
- 26d: switch
- 26e: switch
- 26f: switch
- 28: data processing apparatus
- 30: data processing unit
- 32: data storage unit
- 34: computer-readable storage medium
- 36: computer program
- 38: means for carrying out a method for braking an electric machine

- TTS: transition time span
- TV: transitory voltage

## Claims

1. Method for braking an electric machine (12) of a power tool, in particular an electronically commutated electric machine of a power tool, operable by powering stator phase windings of at least three different stator coils (U, V, W), the method comprising:
- causing application of a transitory voltage (TV) on at least one of the coils (U, V, W) during a transition time span (TTS), wherein the transitory voltage (TV) has a polarity configured for generating a current in the at least one of the coils (U, V, W) that has the same direction as a current that occurs during subsequent short-circuiting of the at least three stator coils (U, V, W), and
- subsequently short-circuiting the at least three stator coils (U, V, W).

2. The method of claim 1,
wherein the transition time span (TTS) is shorter than 2 milliseconds, and/or wherein the electric machine (12) is operable using pulse width modulation and wherein the transition time span (TTS) corresponds to 2 to 20 pulse width modulation cycles.

3. The method of any one of the preceding claims, wherein the transitory voltage (TV) is based on a rotational speed of the electric machine (12).

4. The method of any one of the preceding claims, wherein the electric machine (12) is operable using field-oriented control and wherein causing the application of the transitory voltage (TV) comprises providing an associated current reference value for a current controller forming part of the field-oriented control.

5. The method of claim 4, wherein the current reference value corresponds to a current value associated with short-circuiting the at least three stator coils (U, V, W).

6. The method of claim 4 or 5, wherein the current reference value is predefined.

7. The method of claim 4 or 5, wherein the current reference value is based on a measurement.

8. The method of claim 7, further comprising adapting the current reference value during the service life of the electric machine (12).

9. The method of any one of claims 1 to 3, wherein the electric machine (12) is operable using block commutation and wherein causing the application of the transitory voltage (TV) comprises providing an associated voltage reference value.

10. The method of claim 9, wherein the voltage reference value is predefined.

11. The method of claim 9 or 10, wherein the voltage reference value is based on a measurement.

12. A data processing apparatus (18) comprising means for carrying out the method of any one of the preceding claims.

13. A computer program (36) comprising instructions which, when the computer program (36) is executed by a computer, cause the computer to carry out the method of claims 1 to 11.

14. A computer-readable storage medium (34) comprising instructions which, when executed by a computer, cause the computer to carry out the method of claims 1 to 11.

15. A power tool (10) comprising a data processing apparatus (18) according to claim 12 and an electric machine (12), wherein the data processing apparatus (18) and the electric machine (12) are communicatively coupled.

16. A use of a transitory voltage (TV) applied on a stator phase winding of at least one stator coil (U, V, W) of an electric machine (12) of a power tool when braking the electric machine (12) of the power tool,
wherein the transitory voltage (TV) is applied during a transition time span (TTS), and wherein the transitory voltage (TV) has a polarity configured for generating a current in the at least one of the coils (U, V, W) that has the same direction as a current that occurs during subsequent short-circuiting of the at least three stator coils (U, V, W).
